# EUROPEAN PATENT SPECIFICATION

(11) **EP 1 154 698 B1**
(45) Date of publication and mention of the grant of the patent: **18.06.2003**
(21) Application number: 00903697.1
(22) Date of filing: 15.02.2000
(51) Int. Cl.: A23C 9/13, A23C 9/152, A23C 19/09

(54) **USE OF L-ALANINE AS A SWEETENER**
VERWENDUNG VON L-ALANIN ALS SÜSSSTOFF
UTILISATION DE L-ALANINE COMME EDULCORANT

(30) Priority: 25.02.1999 EP 99103669
(43) Date of publication of application: 21.11.2001
(73) Proprietor: SOCIETE DES PRODUITS NESTLE S.A., 1800 Vevey (CH)
(72) Inventor: VAN DER KAAIJ, Hengameh, CH-1000 Lausanne 26 (CH); ZINK, Ralf, CH-1801 Le Mont Pelerin (CH); MOLLET, Beat, CH-1004 Lausanne (CH)
(74) Representative: Becker Kurig Straus
(86) International application number: EP0001228
(87) International publication number: WO00049881

(56) References cited:
- WO-A-99/36556
- FR-A- 2 135 158
- GB-A- 1 154 139
- LU-A- 35 074
- DATABASE WPI Section Ch, Week 8441 Derwent Publications Ltd., London, GB; Class D13, AN 84-254270 XP002110098 & JP 59 154945 A (NIPPON OILS & FATS CO LTD), 4 September 1984 (1984-09-04)
- PATENT ABSTRACTS OF JAPAN vol. 099, no. 003, 31 March 1999 (1999-03-31) & JP 10 327751 A (SNOW BRAND MILK PROD CO LTD), 15 December 1998 (1998-12-15)
- R. BAKER: "The effect of added amino acids on the flavor of cheddar cheese made from pasteurised milk" JOURNAL OF DAIRY SCIENCE, vol. 32, 1949, pages 769-774, XP002110097 CHAPAIGN, ILLINOIS US
- M. NASR: "Effect of adding alanine, phenylalanine and proline on the properties of romi cheese" EGYPT. JOURNAL OF FOOD SCIENCE, vol. 14, no. 2, 1986, pages 385--390, XP002110314
- PATENT ABSTRACTS OF JAPAN vol. 011, no. 229 (C-436), 25 July 1987 (1987-07-25) & JP 62 040258 A (SHOWA DENKO KK), 21 February 1987 (1987-02-21)
- PATENT ABSTRACTS OF JAPAN vol. 095, no. 007, 31 August 1995 (1995-08-31) & JP 07 107905 A (SANEI GEN F F I INC), 25 April 1995 (1995-04-25)

## Description

The present invention pertains to the use of L-alanine for sweetening dairy products. In particular, the present invention relates to the use of L-alanine for the given purpose in non fat and low fat fermented milks in an amount of from 0.1 to 0.7 % by weight.

Lactic acid bacteria have been used for the preparation of dairy products, such as cheese, buttermilk or yoghurt for long. For this purpose mainly bacteria of the genus streptococcus or lactobacillus are put to use, where their primary function is to convert sugar, such as lactose or glucose, to lactic acid and to produce a satisfying texture and aroma. A problem of any such fermentation resides in that lactic acid will often be produced abundantly rendering the dairy product acid to an extent not accepted by most of the consumers.

One approach to address this problem was the use of a spontaneous lac mutant in the fermentation process which prevented post-acidification to a certain extent. Since lactic acid was not produced in a substantial amount a milder, aromatic and less bitter product could be obtained.

Yet, even those products did not fully meet the consumers preferences that had moved towards milder and sweeter dairy products. For this reason producers considered to include carbohydrates, i.e. sugar, in the dairy products to increase their acceptance. However, though sugar generally fulfils the requirement of a sweet taste the abundant usage thereof concurs with unwanted side effects, such as a high calorie intake and nutritional imbalance. A rather pronounced effect of sugar is that it promotes the formation of caries in the oral cavity of the consumer. Moreover, carbohydrates do often deleteriously affect the texture of the final dairy product such that this option was not pursued.

Also, the use of artificial sweeteners has been envisaged, such as the compounds disclosed in US-P-4,781,927. Recently, a dipeptide, termed aspartame, entered the market and is widely utilized as a low calorie sweetener. Yet, this sweetener proved not to result in an acceptable taste when included in dairy products.

FR-A- 2 135 158 teaches a cheese comprising L-alanine, mono sodium L-glutamate and L-lysin chlorhydrate having a typical Emmenthal cheese flavour.

Therefore, there exists a need in the art to provide dairy products, that show a milder taste. The problem underlying the present invention therefore resides in providing new dairy products, in which the acid taste inherent to said products may be masked, so that it does not stay predominant.

Accordingly this problem has been solved by using L-alanine as a sweetener in dairy products, preferably in dairy products obtained from non fat or low fat fermented milk.

It has surprisingly been found that L-alanine is quite suitable to sweeten the taste of dairy products. L-alanine was likewise found to be capable to mask the acid taste of the products over a prolonged term so that even products, that had developed an increasingly sour taste during their shelf life (as measured according to the increase in pH thereof), are still found to be acceptable in taste by consumers.

According to a preferred embodiment the dairy product to be sweetened may be yogurth, buttermilk, cheese or acidified and non-acidified milk products.

Yet, according to another preferred embodiment the L-alanine used to modify the taste of the dairy product is included in the final product in an amount ranging from 0.1 to 0.7 %, preferably 0.2 to 0.4, more preferably 0.2 to 0.3 % by weight. Consumer tests have shown that a concentration of about 0.25 % was the most acceptable amount to convey a natural sweetness to the final products and to also mask the acid taste thereof. These tests have also shown that L-alanine exhibits its favorable organoleptic effects already when included in low amounts, while when employed in higher concentrations the product itself became bitter. In addition to its effect of giving the dairy product a sweet taste, L-alanine has also been shown that it may in fact cover the acidity of any dairy product developed during fermentation and/or storage, so that sweetness may still be perceived in spite of the dairy product already being acid.

The L-alanine may be added to the dairy product after its preparation or may be produced by the microorganism used to ferment the milk. Such a microorganism is a lactic acid bacterium, preferably belonging to the genus *Streptococcus, Lactobacillus, Lactococcus* or *Leuconostoc*, more preferably *Streptococcus thermophilus* and/or *Lactobacillus delbrueckii* subspecies *bulgaricus*.

The microorganism may be a bacterium the metabolic pathway of which has been modified in such a way that the normal pathway from pyruvate to the various metabolites, especially to lactic acid, has been rerouted such that predominantly D- and L-alanine, preferably only L-alanine, is produced.

This may be effected by induced mutation according to techniques known in the art and a corresponding selection for the desired trait. Yet, a microorganism having desired properties may also be obtained by genetic engineering.

In this respect the expression rate of the enzyme coding for L-alanine dehydrogenase may be increased or L-lactate dehydrogenase may be substantially inactivated so that the major proportion of pyruvate formed during the metabolic action of the lactic acid bacterium is converted to D- or L- alanine. A further step in genetically engineering microorganisms having the desired traits is the deletion of the alanine racemase, which may convert L-alanine to D-alanine.

Yet, to obtain the best results it is often desirable to add L-alanine in purified form to the finished dairy products since the final concentration thereof in the resulting product may be controlled best in this way.

The invention will now be explained by way of examples which are not to be construed as limiting the present invention as laid down in the appended claims.

### Example 1

### Preparing a yogurt

*Lactobacillus delbrueckii* subsp. *bulgaricus* LFi31 (NCC15) and *Streptococcus thermophilus* SFi16 (NCC2019) and SFi25 (NCC2059), that were obtained from the Nestlé Culture Collection, were utilized for preparing yogurt. The strains were subcultured at 40 °C in 10 % skimmed milk powder until a pH of 5.2 was reached.

The starter strains utilized also contributed with their aromatic, non bitter behavior to a perfect yogurt matrix, that did not mask the taste for the added L-alanine. Moreover, *Lactobacillus bulgaricus* LFi31 (NCC15) contributed by its development of a creamy taste to the high quality of the finally achievable product. L-alanine added to the yogurt was purchased from Fluka (CH; purification grade ≥ 99.5 %)

### Example 2

3% skim milk powder was added to 30 liters skimmed milk. After homogenization the milk was pasteurized at 92 °C by a standard technological approach. After the temperature decreased to about 41 °C the skim milk was inoculated with 0.8 % final concentration LFi31 (NCC15) and 3 % final concentration SFi16 (NCC2019) and Sfi25 (NCC2025) and incubated at 40 °C until a pH of 4.4 was reached. The initial pH of the base was 6.6 and the development of the acidification was monitored by measuring the pH in hourly intervals. Fermentation was performed in a tank with a water-heated double mantle. At a pH of 4.5 the fermentation was stopped by decreasing the temperature. For cooling the fermented white yogurt base cold water was used under a permanent slow stirring. Subsequently, the yogurt was homogenized.

### Example 3

### Preparation of the L-alanine concentrations

In 200 ml sterile water 0, 10, 20 and 30 g L-alanine was added Each solution was added to 4 liters yoghurt by stirring to the following final concentrations:
- 0.00 g of L-alanine per 100 g yogurt (= 0 %)
- 0.25 g of L-alanine per 100 g yogurt (= 0.25 %)
- 0.50 g of L-alanine per 100 g yogurt (= 0.50 %)
- 0.75 g of L-alanine per 100 g yogurt (= 0.75 %)

In order to allow development of a full flavor L-alanine was added to the yogurt base four days before presenting the samples to a panel of several people for tasting purpose. The pH of each sample was measured after tasting in order to verify the initially reached pH of about 4.5.

### Example 4

### Sensory evaluation

The test used is to determine whether there are unspecified small sensory differences between two products. A panelist was therefore presented with
- One reference sample (either A or B);
- A pair of samples A&B, each identified by a three digit random number code;
- A pencil and questionnaire;
- Water to rinse and cleanse the mouth.

The inherent strength of this test resides in that it may be used even when differences between the products are not clearly obvious and the nature is not known, which is the case for L-alanine supplemented yogurt.

Table I summarizes the results obtained.

| **Table I: Results and comments of the taster** | | | |
|---|---|---|---|
| Taster | 0.25% L-alanine | 0.50% L-alanine | 0.75% L-alanine |
| 1 | + | + | + |
| | slightly acid | sweeter, fruitful | sweet, less artificial |
| 2 | - | + | + |
| | | more sugar | sweet, old fashion taste |
| 3 | + | + | + |
| | | disgusting | disgusting |
| 4 | + | + | + |
| | more intensive than the reference, like cheese | more intensive, sweeter | |
| 5 | + | + | + |
| | more acid | sweet | sweet |
| 6 | + | + | + |
| | sweeter, less starchy, more oily | sweeter, oily | sweeter, creamy |
| 7 | + | + | + |
| | sweet, less acid, not like yoghurt | sweet, distasteful, not typical yoghurt | very sweet, not yoghurt anymore |
| 8 | + | + | + |
| | sweeter, more oily | sweeter, less acid | sweeter |
| 9 | + | + | + |
| | less acid | | sweeter, fills the mouth |
| 10 | + | + | + |
| | sweeter, overtakes the flat taste of the yogurt | sweeter | tastes rather unpleasant |
| 11 | + | + | + |
| | sweeter | even more sweet | extremely sweet, disgusting |
| 12 | + | + | + |
| | oily, sweet, aromatic | creamy, heavier, intense taste | unpleasant |
| 13 | - | + | + |
| | | less acid, starchy taste | less adstringent, sweet |
| 14 | + | + | + |
| | sweeter, adstringent, white yoghurt | sweeter, adstringent | much sweeter, the best of all |
| 15 | + | + | + |
| | granular, the reference tastes a little flat, and the sample is sweeter and has a fruitful note | even more sweet | extremely sweet, rather too sweet |
| 16 | + | + | + |
| | acid, oily, slightly sweet, pleasant | a little like lemon, less pleasant in taste | unpleasant in the mouth, a little salty |
| 17 | + | + | + |
| | sweeter, less acid | sweeter, different from the reference, | much sweeter |
| 18 | + | + | + |
| | sweeter | | a lot more creamy |
| 19 | + | + | + |
| | sweeter | sweeter | sweeter |
| 20 | + | + | + |
| | more sugar, sweeter | more sugar | more sugar, sweeter, but less good |
| 21 | + | + | + |
| | sweeter, less acid | sweeter | sweeter |
| 22 | - | + | + |
| | | sweeter | less bitter than the reference, sweeter |
| 23 | + | + | + |
| | sweet | sweet, more distinct than the one before | sweet, but different than before |
| 24 | - | + | - |
| (+) the taster found a difference between the samples | | | |
| (-) the taster did not find out a difference | | | |

As may be seen from the above table all yogurts containing L-alanine in different concentrations were considered to be sweet . In contrast thereto the control was never perceived to be sweet. All samples tested had a final pH of about 4.4 after tasting. The common pH ensured that all sample were identical with respect to their acidity. It could therefore be concluded that the pH had no impact on covering or masking the targeted flavor development. Consequently, even when using different microorganisms that produce a more acid and even bitter taste the result may be expected to be identical. In effect the present general teaching may be used to produce "value added milks", that is milk products that are produced in a normal manner and are supplemented with L-alanine.

## Claims

1. Use of L-alanine as a sweetener in dairy products, wherein the L-alanine is included in the dairy product in an amount of from 0.1 to 0.7 % by weight.

2. The use according to claim 1, wherein the amount of L-alanine to be included in the dairy product is in the range of from 0.2 to 0.4 %.

3. The use of L-alanine according to claim 1 or claim 2, wherein the dairy product is produced from non-fat or low-fat milk.

4. The use of L-alanine according to any of the claims 1 to 3 wherein the dairy product is selected from the group selected from yogurt, buttermilk, cheese, acidified and non-acidified milk products.

5. The use according to any of the claims 1 to 4, wherein the milk fermenting microorganism, with which the dairy product has been produced is selected from the group consisting of Streptococcus and/or Lactobacillus.

6. The use according to claim 6, wherein the microorganism is selected from *Streptococcus thermophilus* and/or *Lactobacillus delbrueckii* subspecies *bulgaricus*.

## Patentansprüche

1. Verwendung von L-Alanin als Süßungsmittel in Milchprodukten, wobei das L-Alanin in dem Milchprodukt in einer Menge von 0,1- 0,7 Gew.-% vorhanden ist.

2. Verwendung nach Anspruch 1, wobei die in dem Milchprodukt vorhandene Menge an L-Alanin im Bereich von 0,2 - 0,4 % liegt.

3. Verwendung von L-Alanin nach Anspruch 1 oder Anspruch 2, wobei das Milchprodukt aus fettloser oder fettarmer Milch hergestellt ist.

4. Verwendung von L-Alanin einem der Ansprüche 1 bis 3, wobei das Milchprodukt ausgewählt ist aus der Gruppe bestehend aus Joghurt, Buttermilch, Käse, angesäuerten und nicht-angesäuerten Milchprodukten.

5. Verwendung nach einem der Ansprüche 1 bis 4, wobei der die Milch fermentierende Mikroorganismus, mit dem das Milchprodukt erzeugt wurde, ausgewählt ist aus der Gruppe bestehend aus Streptococcus und/oder Lactobacillus.

6. Verwendung nach Anspruch 6, wobei der Mikroorganismus ausgewählt ist unter Streptococcus thermophilus und/oder Lactobacillus delbrückii Subspezies bulcaricus.

## Revendications

1. Utilisation de L-alanine en tant qu'édulcorant dans des produits laitiers, dans laquelle la L-alanine est incluse dans le produit laitier dans une quantité de 0,1 à 0,7% en poids.

2. Utilisation suivant la revendication 1, dans laquelle la quantité de L-alanine à inclure dans le produit laitier est dans l'intervalle de 0,2 à 0,4%.

3. Utilisation de L-alanine suivant la revendication 1 ou la revendication 2, dans laquelle le produit laitier est obtenu à partir de lait dégraissé ou à faible teneur en graisse.

4. Utilisation de L-alanine suivant l'une quelconque des revendications 1 à 3, dans laquelle le produit laitier est sélectionné dans le groupe choisi parmi un yogourt, un babeurre, un fromage, des produits de laits acidifié et non acidifié.

5. Utilisation suivant l'une quelconque des revendications 1 à 4, dans laquelle le microorganisme fermentant le lait, avec lequel le produit laitier a été obtenu est choisi dans le groupe constitué de *Streptococcus* et/ou de *Lactobacillus*.

6. Utilisation suivant la revendication 5, dans laquelle le microorganisme est choisi parmi le *Streptococcus thermophilus* et/ou le *Lactobacillus delbrueckii* de sous-espèce *bulgaricus*.
